# EUROPEAN PATENT APPLICATION

(11) **EP 4 407 915 A1**
(43) Date of publication of application: **31.07.2024**
(21) Application number: 23787799.8
(22) Date of filing: 13.04.2023
(51) Int. Cl.: H04L 5/00, H04B 7/155

(54) **CHANNEL SEPARATION METHOD AND SYSTEM**

(30) Priority: 13.04.2022 CN 202210384949
(71) Applicant: ZTE Corporation, Shenzhen, Guangdong 518057 (CN)
(72) Inventor: GUO, Xiaojiang, Shenzhen, Guangdong 518057 (CN); LI, Jie, Shenzhen, Guangdong 518057 (CN)
(74) Representative: Pennacchio, Salvatore Giovanni
(86) International application number: PCT/CN2023/088128
(87) International publication number: WO 2023/198157

(57) **Abstract**

Provided are a channel separation method and system. The method includes: switching, by an intelligent reflecting surface or a relay between a base station and a terminal, a codebook of reflected pilot signals to a new codebook at a specified symbol position based on a pre-configured codebook reflection coefficient.

## Description

### Technical Field

Embodiments of the present disclosure relate to the field of communications, and in particular, to a channel separation method and system.

### Background

As a low-cost solution for wireless signal enhancement, intelligent reflecting surfaces have become a hot research topic in the Beyond 5th Generation wireless communication system (B5G) and the 6th Generation wireless communication system (6G). With the assistance of intelligent reflecting surfaces, it is possible to greatly eliminate blind spots and improve the capacity of hot spot areas through the reflection of wireless signals.

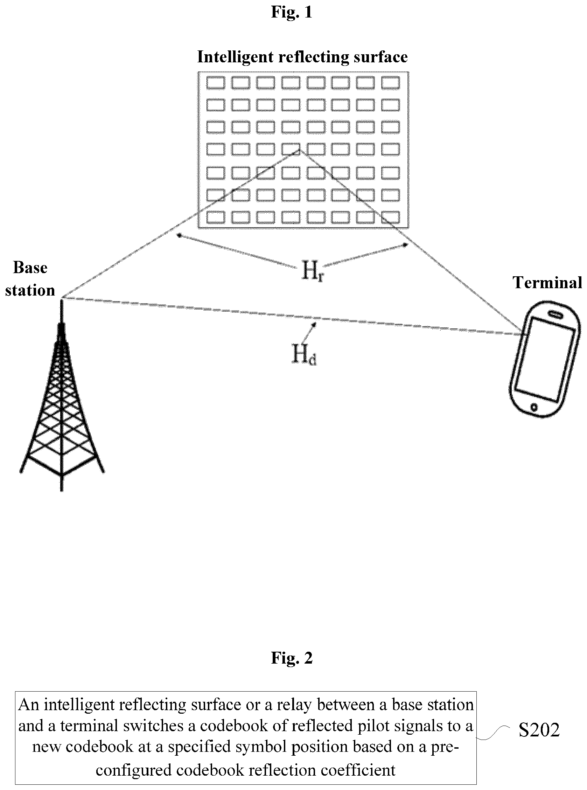

Fig. 1 is a schematic diagram of channels between a base station and a terminal when an intelligent reflecting surface is adopted in the related art. As shown in Fig. 1, there are two types of channels between the base station and the terminal, one is a direct channel H_{d}, and the other is a reflection channel Hᵣ formed by the reflection of the intelligent reflecting surface. When strong channels exist between the base station and the intelligent reflecting surface and between the base station and the terminal, that is, when both the direct channel H_{d} and the reflection channel Hᵣ between the base station and the terminal are strong, the direct channel H_{d} and the reflection channel Hᵣ may have time and angle offsets, which may seriously affect channel estimation and demodulation performance in some scenarios. In addition, since whether the channel is directly from the base station or is formed by the reflection of the intelligent reflecting surface cannot be correctly identified, problems such as positioning error will be caused. The communication system in the related art does not consider the separation of the direct channel and the reflection channel, which results in that the channels received by the base station or the terminal are mixed.

### Summary

Embodiments of the present disclosure provide a channel separation method and system, which may at least solve the problem in the related art that the channels received by the base station or the terminal are mixed.

According to an embodiment of the present disclosure, provided is a channel separation method, including: switching, by an intelligent reflecting surface or a relay between a base station and a terminal, a codebook of reflected pilot signals to a new codebook at a specified symbol position based on a pre-configured codebook reflection coefficient.

According to another embodiment of the present disclosure, also provided is a channel separation system, including: an intelligent reflecting surface or a relay located between a base station and a terminal, and configured to switch a codebook of reflected pilot signals to a new codebook at a specified symbol position based on a pre-configured codebook reflection coefficient.

According to yet another embodiment of the present disclosure, also provided is a computer-readable storage medium. The computer-readable storage medium stores a computer program, and the computer program, when executed by a processor, causes the processor to execute operations in any one of the method embodiments.

According to yet another embodiment of the present disclosure, also provided is an electronic device, including a memory and a processor, wherein the memory stores a computer program, and the processor is configured to run the computer program so as to execute operations in any one of the described method embodiments.

### Brief Description of the Drawings

Fig. 1 is a schematic diagram of channels between a base station and a terminal when an intelligent reflecting surface is adopted in the related art;
Fig. 2 is a flowchart of a channel separation method according to an embodiment of the present disclosure;
Fig. 3 is a structural block diagram of a channel separation system according to an embodiment of the present disclosure;
Fig. 4 is a flowchart of a channel separation method when there is an intelligent reflecting surface according to an embodiment of the present disclosure;
Fig. 5 is a schematic diagram of an intelligent reflecting surface coefficient under a configuration of a 2-symbol pilot signal according to an embodiment of the present disclosure;
Fig. 6 is a schematic diagram of an intelligent reflecting surface coefficient under a configuration of a 2-symbol pilot signal according to an embodiment of the present disclosure;
Fig. 7 is a flowchart of a downlink channel separation method according to an embodiment of the present disclosure; and
Fig. 8 is a flowchart of an uplink channel separation method according to an embodiment of the present disclosure.

### Detailed Description

Hereinafter, the embodiments of the present disclosure will be described in detail with reference to the accompanying drawings and in conjunction with the embodiments.

In the related art, an intelligent reflecting surface or a relay is a low-cost solution for wireless signal enhancement. However, as shown in Fig. 1, in the case where an intelligent reflecting surface or a relay exists, there are two types of channels between the base station and the terminal, one is a direct channel H_{d}, and the other is a reflection channel Hᵣ formed by the reflection of the intelligent reflecting surface, thus resulting in that the channels received by the base station or the terminal at a receiving end are mixed. Therefore, the embodiments of the present disclosure provide a channel separation method and system, which are applied to the case where the intelligent reflecting surface or the relay exists, and can effectively separate the direct channel H_{d} between the base station and the terminal and the reflection channel Hᵣ formed by the reflection of the intelligent reflecting surface, thereby improving performances such as demodulation and positioning.

A channel separation method is provided in the embodiment. Fig. 2 is a flowchart of a channel separation method according to an embodiment of the present disclosure. As shown in Fig. 2, the flow includes the following operation S202.

At operation S202, an intelligent reflecting surface or a relay between a base station and a terminal switches a codebook of reflected pilot signals to a new codebook at a specified symbol position based on a pre-configured codebook reflection coefficient.

In an exemplary embodiment, before the intelligent reflecting surface or the relay switches the codebook of the reflected pilot signals to the new codebook at the specified symbol position, the method further includes: the base station notifies the terminal about configuration of the pilot signals, wherein the pilot signals appear as a group of two pilot symbols, and one or more groups of pilot symbols are configured.

In an exemplary embodiment, the two pilot symbols are continuous symbols or are two pilot symbols separated by at most one pilot symbol, the pilot signals of the two pilot symbols occupy the same Resource Block (RB), and the number of Resource Elements (REs) occupied on each RB is the same.

In an exemplary embodiment, the pilot signals are Demodulation Reference Signals (DMRS), or Synchronization Signal Blocks (SSB), or Physical Random Access Signals (PRS), or Channel State Information Reference Signal (CSI-RS).

In an exemplary embodiment, before the intelligent reflecting surface or the relay switches the codebook of the reflected pilot signals to the new codebook at the specified symbol position, the method further includes: the base station configures or makes an agreement on a parameter set for the intelligent reflecting surface or the relay, wherein the parameter set at least includes one of: a first parameter, a second parameter and a third parameter; wherein the first parameter is used for indicating the codebook reflection coefficient; the second parameter is used for indicating at which pilot symbol positions the intelligent reflecting surface or the relay switches the codebook of the reflected pilot signals; the third parameter is used for indicating time when the intelligent reflecting surface or the relay switches the codebook of the reflected pilot signals, wherein the time includes at least one of: a time slot, and a pilot frequency symbol.

In an exemplary embodiment, the intelligent reflecting surface or the relay switches the codebook of the reflected pilot signals to the new codebook in a following manner: the intelligent reflecting surface or the relay switches the codebook of the pilot signals from an old codebook to the new codebook on one of the two pilot symbols, wherein the new codebook is obtained by multiplying the old codebook by the codebook reflection coefficient.

In an exemplary embodiment, after switching the codebook of the reflected pilot signals to the new codebook at the specified symbol position, the method further includes: after receiving the pilot signals, the terminal or the base station separates a direct channel between the base station and the terminal and a reflection channel formed by reflection of the intelligent reflecting surface or the relay according to the codebook on different pilot symbols of the pilot signals.

In an exemplary embodiment, after separating the direct channel between the base station and the terminal and the reflection channel formed by the reflection of the intelligent reflecting surface or the relay, the method further includes: the terminal feeds back, based on measurement feedback signaling, a measurement result of the direct channel and a measurement result of the reflection channel separately or jointly.

Through the foregoing operations, the intelligent reflecting surface or the relay switches the codebook of reflected pilot signals to the new codebook at the specified symbol position based on the pre-configured codebook reflection coefficient, so as to construct code division of a direct channel and a reflection channel in the time domain. In this way, the terminal or the base station may perform channel separation according to the received pilot signals, thereby effectively separating the direct channel and the reflection channel between the base station and the terminal. Therefore, the problem in the related art that the channels received by the base station or the terminal are mixed can be solved, thereby improving the positioning precision and achieving the effects of improving performances such as wireless signal demodulating performance and positioning performance.

Through the description of the foregoing embodiments, a person having ordinary skill in the art may clearly understand that the method according to the foregoing embodiments may be implemented by software in addition to a necessary universal hardware platform, and definitely may also be implemented by hardware. However, in many cases, the former is a preferred implementation. Based on such understanding, the essence of the technical solutions of the present disclosure or the part contributing to the related art may be embodied in the form of a software product. The computer software product may be stored in a storage medium (such as Read-Only Memory/Random Access Memory (ROM/RAM), magnetic disk, and optical disk), and may include several instructions for instructing a terminal device (which may be a mobile phone or a computer), a server, a network device, or the like to perform the methods described in the embodiments of the present disclosure.

A channel separation system is also provided in the embodiment. The system is used for implementing the described embodiments and exemplary implementations, and what has been described will not be elaborated. The term "module", as used hereinafter, is a combination of software and/or hardware capable of realizing a predetermined function. Although the apparatus described in the following embodiment is preferably implemented by software, implementation of hardware or a combination of software and hardware is also possible and conceived.

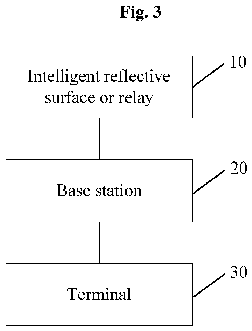

Fig. 3 is a structural block diagram of a channel separation system according to an embodiment of the present disclosure. As shown in Fig. 3, the system includes an intelligent reflecting surface or a relay 10, a base station 20 and a terminal 30.

The intelligent reflecting surface or relay 10 is located between the base station 20 and the terminal 30 and is configured to switch a codebook of reflected pilot signals to a new codebook at a specified symbol position based on a pre-configured codebook reflection coefficient.

The base station 20 is configured to notify the terminal about configuration of the pilot signals, wherein the pilot signals appear as a group of two pilot symbols, and one or more groups of pilot symbols are configured.

The base station 20 or the terminal 30 is further configured to, after receiving the pilot signals, separate a direct channel between the base station and the terminal and a reflection channel formed by reflection of the intelligent reflecting surface or the relay according to the codebook on different pilot symbols of the pilot signals.

In an exemplary embodiment, the base station is further configured to configure or make an agreement on a parameter set for the intelligent reflecting surface or the relay, wherein the parameter set at least includes one of: a first parameter, a second parameter and a third parameter; wherein the first parameter is used for indicating the codebook reflection coefficient; the second parameter is used for indicating at which pilot symbol positions the intelligent reflecting surface or the relay switches the codebook of the reflected pilot signals; the third parameter is used for indicating time when the intelligent reflecting surface or the relay switches the codebook of the reflected pilot signals, wherein the time includes at least one of: a time slot, and a pilot frequency symbol.

In an exemplary embodiment, the terminal is further configured to feed back, based on measurement feedback signaling, a measurement result of the direct channel and a measurement result of the reflection channel separately or jointly.

It should be noted that each module may be implemented by software or hardware. The latter may be implemented in the following manner, but is not limited thereto. All the modules are located in a same processor; alternatively, the modules are located in different processors in an arbitrary combination.

To facilitate understanding of the technical solutions provided in the embodiments of the present disclosure, the technical solution is described as follows in detail with reference to embodiments of specific scenarios.

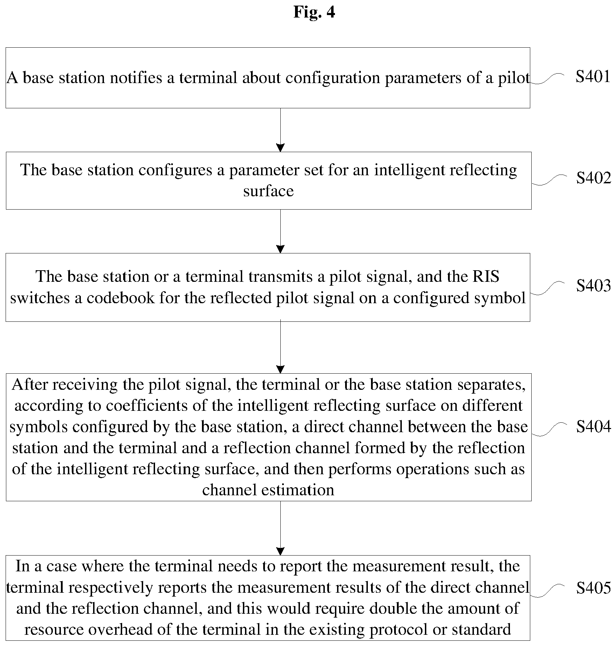

The embodiments of the present disclosure provides a channel separation method in a case where an intelligent reflecting surface exists, which can effectively separate a direct channel H_{d} between a base station and a terminal and a reflection channel Hᵣ formed by the reflection of the intelligent reflecting surface, thereby improving performances such as demodulation performance and positioning performance. Fig. 4 is a flowchart of a channel separation method when there is an intelligent reflecting surface according to an embodiment of the present disclosure. As shown in Fig. 4, the method includes the following operations S401 to S405.

At operation S401, a base station notifies a terminal about configuration parameters of a pilot signal.

The configuration parameters of the pilot signal may indicate the pilot signal in the form of a group of two continuous symbols in the time domain, and one or more groups may be configured.

At operation S402, the base station configures a parameter set for a Reconfigurable Intelligence Surface (RIS).

The parameter set includes three parts:
1. A first parameter indicating a codebook reflection coefficient, wherein the first parameter may indicate one scalar by which the codebook of the RIS is to be multiplied, and the first parameter may be appointed in advance, and is -1 by default;
2. A second parameter indicating on which Orthogonal Frequency Division Multiplexing (OFDM) symbols the codebook of the RIS is switched, and the second parameter may be appointed in advance, for example, the switching may be implemented on the second symbol of two pilot symbols by default in a normal case;
3. A third parameter indicating a timeslot and an OFDM symbol where the pilot signal is sent.

At operation S403, the base station or the terminal transmits a pilot signal, and the RIS switches a codebook for the reflected pilot signal on the configured symbol.

The new codebook to be switched to is obtained by multiplying the original codebook by a specified scalar, for example, for a 1-bit intelligent reflecting surface, the codebook of the intelligent reflecting surface may be multiplied by -1 on the second pilot symbol of two continuous symbols occupied by the reference signal. Other forms of codebook coefficient may also be used in this embodiment.

At operation S404, after receiving the pilot signal, the terminal or the base station separates, according to the coefficients, configured by the base station, of the intelligent reflecting surface on different symbols, a direct channel between the base station and the terminal and a reflection channel formed by the reflection of the intelligent reflecting surface, and then performs operations such as channel estimation.

At operation S405, in a case where the terminal needs to report the measurement result, the terminal respectively reports the measurement results of the direct channel and the reflection channel, and this would require double the amount of resource overhead of the terminal in the existing protocol or standard.

This embodiment also provides possible time domain situations when the coefficient of the codebook of the RIS is switched under a configuration of a 2-symbol pilot signal and under a configuration of a 4-symbol pilot signal respectively.

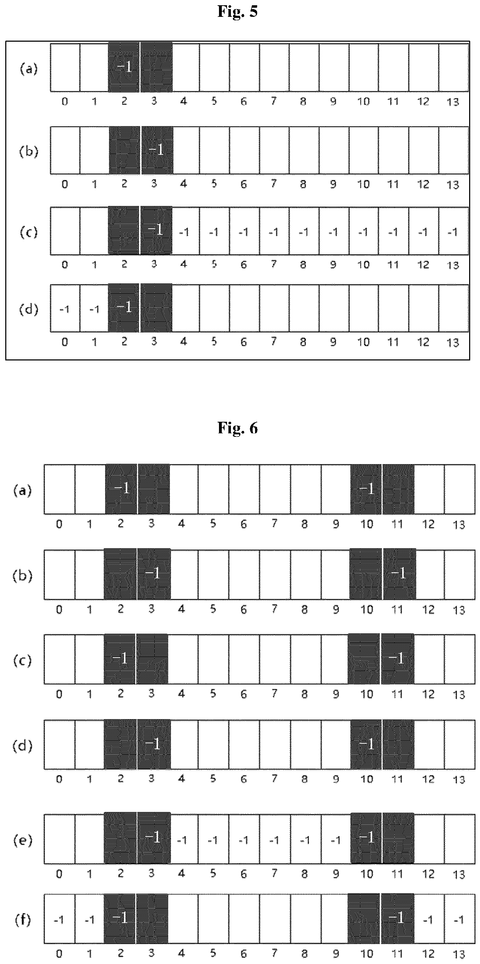

Under a configuration of a 2-symbol pilot signal:
When two pilot symbols are configured, a time domain position of the pilot symbols and the corresponding coefficient of the intelligent reflecting surface can be represented by Fig. 5. Fig. 5 shows 14 symbols (namely, symbol 0 to symbol 13) in a slot, in which the position where a black box is located is the position of a pilot, and if there is -1 in the box where the symbol is located, it represents that the codebook of the intelligent reflecting surface on the symbol is obtained by multiplying the original codebook by -1.

Assuming that the direct channel between the base station and the terminal after the channel separation is as *Hd,* and the reflection channel formed by the reflection of the intelligent reflecting surface between the base station and the terminal is as *H_{f}*, then:
The combined channel in Fig. 5(a) and Fig. 5(b) may be expressed as *H_{d}* + *H_{f}.*

The combined channel on symbol 0 and symbol 1 in Fig. 5(c) may be represented as *H_{d}* + *H_{f}*, and the combined channel on symbol 4 to symbol 13 in Fig. 5(c) may be represented as *H_{d} - H_{f}.*

The combined channel on symbol 0 and symbol 1 in Fig. 5(d) may be represented as *H_{d} - H_{f}*, and the combined channel on symbol 4 to symbol 13 in Fig. 5(d) may be represented as *H_{d}* + *H_{f}*.

Under a configuration of a 4-symbol pilot signal:
When four pilot symbols are configured, a time domain position of the pilot symbols and the corresponding coefficient of the intelligent reflecting surface can be represented by Fig. 6.

The combined channel in Fig. 6(a), Fig. 6(b), Fig. 6(c) and Fig. 6(d) may be expressed as *H_{d}* + *H_{f}.*

The combined channel on symbol 0, symbol 1, symbol 12 and symbol 13 in Fig. 6(e) may be represented as *H_{d}* + *H_{f}*, and the combined channel on symbol 4 to symbol 9 in Fig. 6(e) may be represented as *H_{d}* - *H_{f}.*

The combined channel on symbol 0, symbol 1, symbol 12 and symbol 13 in Fig. 6(f) may be represented as *H_{d} - H_{f}*, and the combined channel on symbol 4 to symbol 9 in Fig. 6(f) may be represented as *H_{d}* + *H_{f}*.

It should be noted that only 2-symbol and 4-symbol DMRS configurations are shown in the embodiments of the present disclosure, but there are many combinations of actual configuration types. The embodiments of the present disclosure construct code division between the direct channel and the reflection channel in the time domain by multiplying the codebook of the RIS by a coefficient, thereby realizing channel separation.

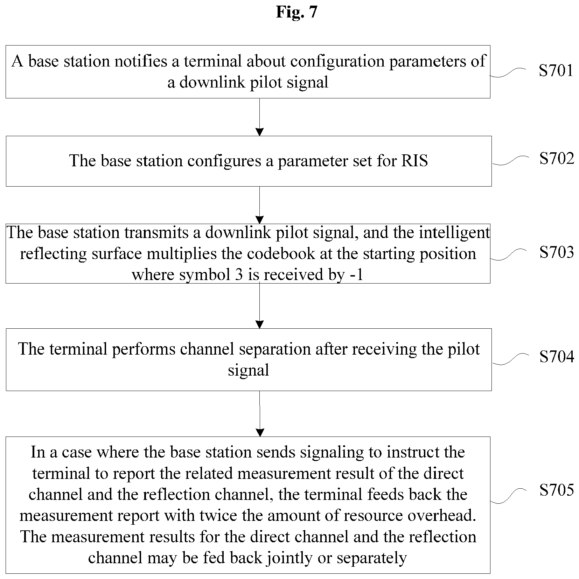

The embodiments of the present disclosure further provide a downlink channel separation method. Fig. 7 is a flowchart of a downlink channel separation method according to an embodiment of the present disclosure. As shown in Fig. 7, the method includes the following operations S701 to S705.

At operation S701, a base station notifies a terminal about configuration parameters of a downlink pilot signal.

The configuration parameters of the pilot signal may indicate the pilot signal in the form of a group of two continuous symbols in the time domain, and one or more groups may be configured. For example, assuming that a pilot signal is configured on symbol 2 and symbol 3, the parameter configured by the base station for the terminal indicates that the codebook starting from symbol 3 is to be multiplied by -1 by the intelligent reflecting surface, or the base station and the terminal agrees in advance that the second pilot symbol of two continuous pilot symbols is to be multiplied by -1. The base station may also configure feedback of the terminal, for example, the base station may configure the terminal to feed back channel measurement results of the direct channel and the reflection channel at the same time, including but not limited to parameters such as Reference Signal Receiving Power (RSRP), time delay, and signal-to-interference ratio.

At operation S702, the base station configures a parameter set for RIS.

The parameter set includes three parts:
1. A first parameter indicating a codebook reflection coefficient, wherein the first parameter may indicate one scalar, e.g., -1, by which the codebook of the RIS is to be multiplied, and the first parameter may be appointed in advance, and is not configured by default;
2. A second parameter indicating on which symbols the codebook of the RIS is switched, for example, the codebook may be multiplied by -1 from the starting position of symbol 3, and the second parameter may be appointed in advance, and is not configured by default;
3. A third parameter indicating time when the intelligent reflecting surface performs the switching as indicated by the base station, and the time may be a specific time slot, may also be a specific index of a time slot and an OFDM symbol, and may also be a specific time, which is not specifically limited herein.

At operation S703, the base station transmits a downlink pilot signal, and the intelligent reflecting surface multiplies the codebook at the starting position where symbol 3 is received by -1.

At operation S704, the terminal performs channel separation after receiving the pilot signal.

Assuming that the pilots obtained by dividing the pilot signals on symbol 2 and symbol 3 by the respective mother codes are respectively denoted as *H*_{*ls*2} and *H*_{*ls*3}, then the direct channel between the base station and the terminal may be denoted as (*H*_{*ls*2} +*H*_{*ls*3})/2, and the reflection channel formed by the reflection of the intelligent reflecting surface between the base station and the terminal may be denoted as (*H*_{*ls*2} -*H*_{*ls*3})/2. With the direct channel and the reflection channel, subsequent operations such as channel estimation and locating can be performed.

At operation S705, in a case where the base station sends signaling to instruct the terminal to report the related measurement result of the direct channel and the reflection channel, the terminal feeds back the measurement report with twice the amount of resource overhead. The measurement results for the direct channel and the reflection channel may be fed back jointly or separately.

In this embodiment, the base station configures parameters for the terminal. The configuration parameters need to include: the base station notifies the terminal of the configuration parameters of a downlink pilot signal. The pilot signals need to appear in a group of two OFDM symbols, and the two OFDM symbols are preferably continuous symbols. One or more groups may be configured. In consideration of a switching restriction of RIS, in a case where the switching on continuous symbols cannot be realized, the two pilot symbols may be separated by at most one symbol. The pilots on two symbols occupy the same RE and RB. The pilot herein may be DMRS, SSB, PRS, CSI-RS, SRS, PTRS, etc., and needs to appear on two symbols.

In this embodiment, a parameter may be configured to indicate the coefficient for the switching of the codebook of the RIS to the terminal, which is -1 by default and may be omitted. The new codebook to be switched to by the RIS = configured coefficient × old codebook of the RIS.

In this embodiment, if the base station needs the terminal to feed back the measurement results of the direct channel and the reflection channel, for example, feed back the CSI (including RSRP, a signal-to-dryness ratio, and the like) for the direct channel and the reflection channel, a signaling needs to be configured to indicate whether the direct channel, or the reflection channel, or both the direct channel and the reflection channel needs to be fed back. The direct channel and the reflection channel may be fed back separately in groups, or may be fed back jointly.

In this embodiment, the base station configures parameters for the RIS, and these configuration parameters include:
A parameter related to a codebook reflection coefficient: the parameter indicates a scalar by which the codebook of the RIS is to be multiplied, and the configuration parameter is -1 by default. The base station transmits a downlink pilot frequency signal, and the intelligent reflecting surface needs to switch the codebook to a new codebook at a specified symbol position, wherein the new codebook = the configured reflection coefficient * the old codebook.

A parameter indicating on which OFDM symbols the RIS switches the codebook: the symbol positions on which the codebook is switched may be agreed in advance. Since there are many types of reference signals, the agreed default value is applicable to common pilot signals. Due to the variety of pilots and the diversity of configurations, this parameter cannot be defaulted in most cases.

A parameter indicating time when the intelligent reflecting surface performs the switching as indicated by the base station: the time may be a specific timeslot, may also be an index of a timeslot plus an OFDM symbol, and may also be a specific time, which is not specifically limited herein.

In this embodiment, if the base station needs the terminal to feed back a channel measurement result, when the measurement result of both the direct channel and the reflection channel need to be fed back at the same time, the resource overhead of the feedback needs to be twice as high as that of the original one. In the case of being unable to be distinguished, the terminal needs to inform the base station concerning whether the measurement result fed back is that for the direct channel, or the reflection channel, or the combined channel of the direct channel and the reflection channel.

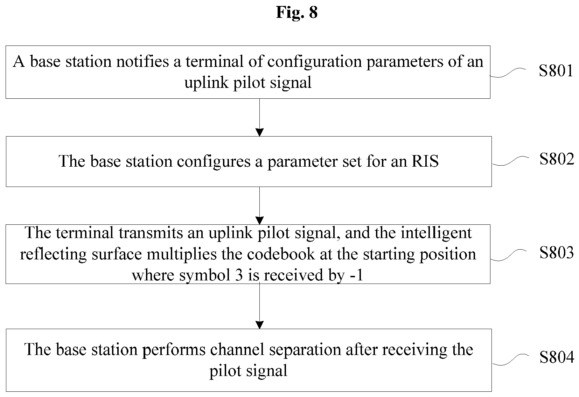

The embodiments of the present disclosure further provide an uplink channel separation method. Fig. 8 is a flowchart of an uplink channel separation method according to an embodiment of the present disclosure. As shown in Fig. 8, the method includes the following operations S801 to S804

At operation S801, a base station notifies a terminal about configuration parameters of an uplink pilot signal.

The configuration parameters of the pilot signal may indicate the pilot signal in the form of a group of two continuous symbols in the time domain, and one or more groups may be configured. For example, it is assumed that a pilot signal is configured on symbol 2 and symbol 3.

At operation S802, the base station configures a parameter set for RIS.

The parameter set includes three parts:
1. A first parameter indicating a codebook reflection coefficient, wherein the first parameter may indicate one scalar by which the codebook of the RIS is to be multiplied, and the scalar may not be configured, and is -1 by default;
2. A second parameter indicating on which symbols the codebook of the RIS is switched, for example, the codebook may be multiplied by -1 from the starting position of symbol 3, and the second parameter may be appointed in advance, and is not configured by default;
3. A third parameter indicating time when the intelligent reflecting surface performs the switching as indicated by the base station, and the time may be a specific time slot, may also be a specific index of a time slot and an OFDM symbol, and may also be a specific time, which is not specifically limited herein.

At operation S803, the terminal transmits an uplink pilot signal, and the intelligent reflecting surface multiplies the codebook at the starting position where symbol 3 is received by -1.

At operation S804, the based station performs channel separation after receiving the pilot signal.

Assuming that the pilots obtained by dividing the pilot signals on symbol 2 and symbol 3 by the respective mother codes are respectively denoted as *H*_{*ls*2} and *H*_{*ls*3}, then the direct channel between the base station and the terminal may be denoted as (H_{*ls*2} +H_{*ls*3})/2, and the reflection channel formed by the reflection of the intelligent reflecting surface between the base station and the terminal may be denoted as (*H*_{*ls*2} -*H*_{*ls*3})/2. With the direct channel and the reflection channel, subsequent operations such as channel estimation and locating can be performed.

In this embodiment, the base station notifies the terminal about configuration parameters of uplink pilot signals. The pilot signals need to appear in a group of two OFDM symbols, and the two OFDM symbols are preferably continuous symbols. One or more groups may be configured. In consideration of a switching restriction of RIS, in a case where the switching on continuous symbols cannot be realized, the two pilot symbols may be separated by at most one symbol. The pilots on two symbols occupy the same RE and RB. The pilot herein may be DMRS, SRS, etc., and needs to appear on two symbols.

In this embodiment, the base station configures a parameter set for RIS, and the configured parameters need to include:
A parameter related to a codebook reflection coefficient: the parameter indicates a scalar by which the codebook of the RIS is to be multiplied, and the configuration parameter is -1 by default. The terminal transmits an uplink pilot frequency signal, and the intelligent reflecting surface needs to switch the codebook to a new codebook at a specified symbol position, wherein the new codebook = the configured reflection coefficient * the old codebook.

A parameter indicating on which OFDM symbols the RIS switches the codebook: the symbol positions on which the codebook is switched may be agreed in advance. Since there are many types of reference signals, the agreed default value is applicable to common pilot signals. Due to the variety of pilots and the diversity of configurations, this parameter cannot be defaulted in most cases.

A parameter indicating time when the intelligent reflecting surface performs the switching as indicated by the base station: the time may be a specific timeslot, may also be an index of a timeslot plus an OFDM symbol, and may also be a specific time, which is not specifically limited herein.

It should be noted that RISs in all the embodiments of the present disclosure may be replaced with a relay, and for a specific example, reference may be made to the examples described in the foregoing embodiments and exemplary embodiments, which are not repeated herein.

By means of the embodiments of the present disclosure, code division of the direct channel and the reflection channel in a time domain at a receiving end is constructed through signaling interaction between the base station, the intelligent reflecting surface and the terminal and switching of the codebook of the intelligent reflecting surface, so that the direct channel and the reflection channel formed by the reflection of the intelligent reflecting surface can be separated simply and effectively, thereby achieving the purposes of improving the throughput, positioning accuracy, etc.

The embodiments of the present disclosure further provide a computer-readable storage medium. The computer-readable storage medium stores a computer program, wherein the computer program, when running on a processor, causes the processor to execute the operations in any one of the method embodiments.

In an exemplary embodiment, the computer-readable storage medium may include, but is not limited to, any medium that can store a computer program, such as a Universal Serial Bus (USB) flash drive, a Read-Only Memory (ROM), a Random Access Memory (RAM), a removable hard disk, a magnetic disk, or an optical disc.

The embodiments of the present disclosure also provide an electronic device, including a memory and a processor, wherein the memory stores a computer program, and the processor is configured to run the computer program so as to execute the operations in any of the described method embodiments.

In an exemplary embodiment, the electronic device may further include a transmission device and an input/output device, wherein the transmission device is connected to the processor, and the input/output device is connected to the processor.

For specific examples in this embodiment, reference may be made to the examples described in the foregoing embodiments and exemplary embodiments, and details are not repeatedly described in this embodiment.

Obviously, those having ordinary skill in the art should understand that each module or each operation of the described embodiments of the present disclosure may be implemented by a universal computing device, they may be centralized on a single computing device or distributed on a network composed of a plurality of computing devices, they can be implemented by program codes executable by a computing apparatus, and thus can be stored in a storage device and executed by the computing device, furthermore, in some cases, the shown or described operations may be executed in an order different from that described here, or they are made into integrated circuit modules respectively, or a plurality of modules or operations therein are made into a single integrated circuit module for implementation. Thus, the present disclosure is not limited to any particular combination of hardware and software.

The above description is only the exemplary embodiments of the present disclosure, and is not intended to limit the present disclosure. For those having ordinary skill in the art, the present disclosure may have various modifications and variations. Any modifications, equivalent replacements, improvements and the like made within the principle of the present disclosure shall belong to the protection scope of the present disclosure.

## Claims

1. A channel separation method, comprising:
switching, by an intelligent reflecting surface or a relay between a base station and a terminal, a codebook of reflected pilot signals to a new codebook at a specified symbol position based on a pre-configured codebook reflection coefficient.

2. The method according to claim 1, wherein before switching, by the intelligent reflecting surface or the relay between the base station and the terminal, the codebook of the reflected pilot signals to the new codebook at the specified symbol position, the method further comprises:
notifying, by the base station, the terminal about configuration of the pilot signals, wherein the pilot signals appear as a group of two pilot symbols, and one or more groups of pilot symbols are configured.

3. The method according to claim 2, wherein the two pilot symbols are continuous symbols or are two pilot symbols separated by at most one pilot symbol, the pilot signals of the two pilot symbols occupy the same Resource Block, RB, and the number of Resource Elements, REs, occupied on each RB is the same.

4. The method according to claim 1, wherein the pilot signals are Demodulation Reference Signals, DMRS, or Synchronization Signal Blocks, SSB, or Physical Random Access Signals, PRS, or Channel State Information Reference Signal, CSI-RS.

5. The method according to claim 2, wherein before switching, by the intelligent reflecting surface or the relay between the base station and the terminal, the codebook of the reflected pilot signals to the new codebook at the specified symbol position, the method further comprises:
configuring or making an agreement on, by the base station, a parameter set for the intelligent reflecting surface or the relay, wherein the parameter set at least comprises one of: a first parameter, a second parameter and a third parameter; wherein
the first parameter is used for indicating the codebook reflection coefficient;
the second parameter is used for indicating at which pilot symbol positions the intelligent reflecting surface or the relay switches the codebook of the reflected pilot signals;
the third parameter is used for indicating time when the intelligent reflecting surface or the relay switches the codebook of the reflected pilot signals, wherein the time comprises at least one of: a time slot, and a pilot frequency symbol.

6. The method according to claim 5, wherein switching, by the intelligent reflecting surface or the relay between the base station and the terminal, the codebook of the reflected pilot signals to the new codebook comprises:
switching, by the intelligent reflecting surface or the relay, the codebook of the pilot signals from an old codebook to the new codebook on one of the two pilot symbols, wherein the new codebook is obtained by multiplying the old codebook by the codebook reflection coefficient.

7. The method according to claim 5, wherein after switching the codebook of the reflected pilot signals to the new codebook at the specified symbol position, the method further comprises:
after receiving the pilot signals, separating, by the terminal or the base station, a direct channel between the base station and the terminal and a reflection channel formed by reflection of the intelligent reflecting surface or the relay according to the codebook on different pilot symbols of the pilot signals.

8. The method according to claim 7, wherein after separating the direct channel between the base station and the terminal and the reflection channel formed by the reflection of the intelligent reflecting surface or the relay, the method further comprises:
feeding back, by the terminal based on measurement feedback signaling, a measurement result of the direct channel and a measurement result of the reflection channel separately or jointly.

9. A channel separation system, comprising:
an intelligent reflecting surface or a relay located between a base station and a terminal, and configured to switch a codebook of reflected pilot signals to a new codebook at a specified symbol position based on a pre-configured codebook reflection coefficient.

10. The system according to claim 9, further comprising:
the base station, configured to notify the terminal about configuration of the pilot signals, wherein the pilot signals appear as a group of two pilot symbols, and one or more groups of pilot symbols are configured.

11. The system according to claim 10, wherein
the base station is further configured to configure or make an agreement on a parameter set for the intelligent reflecting surface or the relay, wherein the parameter set at least comprises one of: a first parameter, a second parameter and a third parameter; wherein
the first parameter is used for indicating the codebook reflection coefficient;
the second parameter is used for indicating at which pilot symbol positions the intelligent reflecting surface or the relay switches the codebook of the reflected pilot signals;
the third parameter is used for indicating time when the intelligent reflecting surface or the relay switches the codebook of the reflected pilot signals, wherein the time comprises at least one of: a time slot, and a pilot frequency symbol.

12. The system according to claim 9, further comprising the base station or the terminal, wherein
the base station or the terminal is further configured to separate, after receiving the pilot signals, a direct channel between the base station and the terminal and a reflection channel formed by reflection of the intelligent reflecting surface or the relay according to the codebook on different pilot symbols of the pilot signals.

13. The system according to claim 12, wherein
the terminal is further configured to feed back, based on measurement feedback signaling, a measurement result of the direct channel and a measurement result of the reflection channel separately or jointly.

14. A computer-readable storage medium, wherein the computer-readable storage medium stores a computer program, and the computer program, when executed by a processor, causes the processor to execute operations of the method according to any one of claims 1 to 8.

15. An electronic device, comprising a memory, a processor, and a computer program stored on the memory and capable of running on the processor, wherein the processor, when executing the computer program, implements operations of the method according to any one of claims 1 to 8.
